# EUROPÄISCHE PATENTSCHRIFT

(11) **EP 3 583 273 B1**
(45) Veröffentlichungstag und Bekanntmachung des Hinweises auf die Patenterteilung: **28.04.2021**
(21) Anmeldenummer: 18706404.3
(22) Anmeldetag: 29.01.2018
(51) Int. Cl.: E03C 1/04, E03C 1/044, F24D 19/10, F24H 9/20, G05D 23/19

(54) **VORRICHTUNG ZUR AUSGABE VON HEISSWASSER**
DEVICE FOR DISPENSING HOT WATER
DISPOSITIF DE DISTRIBUTION D'EAU CHAUDE

(30) Priorität: 14.02.2017 DE 102017102956
(43) Veröffentlichungstag der Anmeldung: 25.12.2019
(73) Patentinhaber: Franke Technology and Trademark Ltd, 6052 Hergiswil (CH)
(72) Erfinder: VETTERLI, Heinz, 8855 Wangen (CH); RÜEGG, Andreas, 6024 Hildisrieden (CH)
(74) Vertreter: Lemcke, Brommer & Partner Patentanwälte Partnerschaft mbB
(86) Internationale Anmeldenummer: PCT/EP2018/052081
(87) Internationale Veröffentlichungsnummer: WO 2018/149624

(56) Entgegenhaltungen:
- EP-A1- 2 226 571
- WO-A1-2005/057086
- DE-A1- 4 017 695

## Beschreibung

Die vorliegende Erfindung betrifft eine Vorrichtung zur Ausgabe von Heißwasser, mit einer an einer Spüle installierbaren Wasserauslaufarmatur und mit einem in einem Wasserzulauf der Wasserauslaufarmatur angeordneten Heißwasserbereiter.

Zur Entnahme von Wasser im Küchenbereich dienen Küchenarmaturen, die an einer Spüle installiert werden. Die meisten Küchenarmaturen besitzen Zuläufe für Warmwasser und Kaltwasser. Eine Einstellung der Wassertemperatur am Auslauf erfolgt über einen in der Armatur integrierten Mischer, mit dem das Mischungsverhältnis zwischen Warm- und Kaltwasser eingestellt werden kann. Daneben sind Armaturen bekannt, an denen, meist zusätzlich zu Warm- und Kaltwasser, kochend heißes Wasser ausgegeben werden kann, das zum Kochen, Spülen oder für Tee und Kaffee verwendet werden kann. Die Armatur ersetzt somit die Funktion eines zusätzlichen Wasserkochers. Zu diesem Zweck ist an einem entsprechenden Heißwasserzulauf der Armatur ein Heißwasserbereiter angeschlossen. Als Heißwasserbereiter dient bei am Markt bekannten Kochwasserarmaturen ein unter Druck stehender Boiler, in dem das entsprechend temperierte Heißwasser vorgehalten wird.

Bei einer Armatur mit Heißwasserfunktion muss sichergestellt werden, dass ein Benutzer sich nicht versehentlich mit kochendem Heißwasser verbrühen kann. Daher erfolgt die Ausgabe des Heißwassers in der Regel über einen separaten Auslass, zumindest erfolgt jedoch die Betätigung der Heißwasserfunktion über ein vom Mischventil für Warm-/Kaltwasser getrenntes Ventil. Eine Temperaturregelung durch Beimischung von Kaltwasser ist daher nicht möglich. Das Heißwasser kann vielmehr nur mit der fest vorgegebenen Temperatur ausgegeben werden, mit der es im Boiler vorgehalten wird.

Eine wichtige Anwendung solcher Heißwasserarmaturen ist die Entnahme von kochendem Wasser zur Zubereitung von Heißgetränken wie Tees, Brühkaffee oder Instantgetränken. Hier kann jedoch die benötigte Wassertemperatur von Getränk zu Getränk unterschiedlich sein. So wird beispielsweise Schwarztee idealerweise bei einer Temperatur von 90°C, Grüner Tee bei einer Temperatur von 70 bis 85°C, Kräutertee bei einer Temperatur von 95°C und Kaffee je nach Sorte bei einer Temperatur von 86 bis 96 °C aufgebrüht.

Die DE 40 17 695 A1 beschreibt einen Durchlauferhitzer, der an eine berührungslose Wasserarmatur für eine Duschkabine angeschlossen wird. Eine Regelung der Auslauftemperatur erfolgt indem über ein Regelventil die durch den Durchlauferhitzer fließende Wassermenge verändert wird. Daneben beschreibt die D1 auch eine Einrichtung für Fleischereibetriebe, bei der über separate Ausläufe wahlweise sehr heißes Wasser mit 82°C zum Spülen und weniger warmes Wasser mit 42°C zum Händewaschen ausgegeben werden soll. Eine Temperaturregelung für das Heißwasser ist in der D1 nicht beschrieben.

Die WO 2005/057086 A1 beschreibt einen Durchlauferhitzer mit einer Zirkulationsleitung, in der in einem Stand-by-Betrieb Wasser zirkuliert und vom Durchlauferhitzer auf eine vorgegebene Temperatur aufgeheizt wird. Ist diese erreicht, so werden Pumpe und Durchlauferhitzer abgeschaltet. Fällt die Temperatur unter die Mindesttemperatur, werden Pumpe und Durchlauferhitzer wieder angeschaltet. Hierdurch wird gewährleistet, dass beim Öffnen der Armatur sofort warmes Wasser zur Verfügung steht. Eine Regelung der Durchflussrate erfolgt nicht und das An- und Ausschalten der Pumpe findet nur bei geschlossener Armatur im Stand-by-Modus statt.

Die EP 2 226 571 A1 zeigt einen Warmwasserspeicher, in dem Wasser über eine primäre Wärmequelle, wie etwa eine solarthermische Heizeinrichtung, eine Wärmepumpe oder Erdwärme, erwärmt wird. Solange das Wasser im Speicher noch nicht ausreichend erwärmt ist, findet eine Nacherwärmung über einen nachgeschalteten Wärmetauscher statt, durch den das Wärmeübertragungsmedium der primären Wärmequelle geleitet wird. Die über den Wärmetauscher zugeführte Energie kann hierbei dosiert werden, indem über die Pumpleistung die Durchflussrate im Primärkreislauf geregelt wird.

Der Erfindung liegt die Aufgabe zugrunde, eine Vorrichtung zur Ausgabe von Heißwasser anzugeben, bei der die Temperatur des Heißwassers einstellbar ist.

Die Aufgabe wird gelöst durch die Merkmale des Anspruchs 1, vorteilhafte Ausgestaltungen sind den abhängigen Ansprüchen zu entnehmen.

Bei einer Vorrichtung zur Ausgabe von Heißwasser einstellbarer Temperatur, mit einer an einer Spüle installierbaren Wasserauslaufarmatur und mit einem in einem Wasserzulauf der Wasserauslaufarmatur angeordneten Heißwasserbereiter, wird die Aufgabe erfindungsgemäß dadurch gelöst, dass der Heißwasserbereiter als Durchlauferhitzer ausgebildet ist und dass in dem Wasserzulauf der Wasserauslaufarmatur außerdem mindestens ein Messwertgeber angeordnet ist, der eine Messgröße in Bezug auf durch den Durchlauferhitzer strömendes Wasser ermittelt. Außerdem weist die Wasserausgabevorrichtung eine Steuerungsvorrichtung auf, die ausgebildet ist, in Abhängigkeit von Messwerten des Messwertgebers eine Durchflussrate durch den Durchlauferhitzer zu regeln, um die Temperatur des Heißwassers einzustellen. Der Temperaturbereich, auf den das Heißwasser erhitzt werden kann, liegt hierbei in einem Bereich von 70 bis 98°C.

Die erfindungsgemäße Vorrichtung beruht somit auf dem Prinzip, das Heißwasser erst bei der Ausgabe mittels eines Durchlauferhitzers auf die gewünschte Temperatur zu erhitzen, statt entsprechend vortemperiertes Heißwasser in einem Boiler zur jederzeitigen Verwendung bereitzuhalten. Dabei geht die Erfindung von der Erkenntnis aus, dass bei vorgegebener Heizleistung des Durchlauferhitzers die erreichte Endtemperatur des Heißwassers unter anderem von der Durchflussrate abhängt. Soll die Temperatur des Heißwassers am Auslauf erhöht werden, so wird die Durchflussrate vermindert; soll umgekehrt die Heißwassertemperatur reduziert werden, so wird die Durchflussrate erhöht.

Mit der Erfindung wird damit gleichsam der Vorteil eines niedrigeren Energieverbrauchs erreicht, da nicht ständig ein Heißwasservorrat auf Temperatur gehalten werden muss, sondern das Heißwasser instantan, zum Zeitpunkt des Bezugs, erhitzt wird, und auch dies nur auf die jeweils gewünschte Temperatur.

Die Regelung der Durchflussrate erfolgt hierbei in einer bevorzugten Ausführungsform dadurch, dass in dem Wasserzulauf der Wasserauslaufarmatur zulaufseitig des Durchlauferhitzers eine Wasserpumpe vorgesehen ist und über die Steuerungsvorrichtung die Pumpleistung der Wasserpumpe angepasst wird, um die Durchflussrate zu verändern. Die Anpassung der Pumpleistung der Wasserpumpe kann hierbei je nach eingesetztem Pumpentyp über Phasenanschnittsteuerung, Pulsweitenmodulation oder Drehzahlsteuerung erfolgen. Als Wasserpumpe können Schwingankerpumpen, Zahnradpumpen oder Flügelradpumpen eingesetzt werden.

Alternativ zu einer leistungsgeregelten Wasserpumpe kann in dem Wasserzulauf der Wasserauslaufarmatur auch ein von der Steuerungsvorrichtung angesteuertes Stetigventil vorgesehen sein, mit dem durch kontinuierliches oder schrittweises Öffnen oder Schließen die Durchflussrate verändert werden kann.

Daneben kann es zweckmäßig sein, zusätzlich zu einer Regelung der Durchflussrate auch die elektrische Heizleistung des Durchlauferhitzers in Abhängigkeit der gewünschten Heißwassertemperatur einzustellen. Auf diese Weise kann ein größerer Temperaturbereich des Heißwassers abgedeckt und der zur Temperatureinstellung erforderliche Einstellbereich der Durchflussrate kleiner gewählt werden, sodass die Veränderung der Durchflussrate zur Temperatureinstellung für einen Benutzer nur weniger wahrnehmbar ist.

Als Messwertgeber kann unter anderem ein im Wasserzulauf angeordneter Durchflussmesser dienen, mit dem die Ist-Durchflussrate bestimmt und die Soll-Durchflussmenge und damit die bei Durchströmen des Durchlauferhitzers erreichte Endtemperatur in Abhängigkeit davon geregelt wird.

Alternativ oder kumulativ kann auch ein in Flussrichtung hinter dem Durchlauferhitzer angeordneter Temperatursensor vorgesehen sein, der zur Bestimmung einer Ist-Temperatur des Heißwassers dient. Die Durchflussrate kann dann in Abhängigkeit der Ist-Temperatur geregelt werden, um eine gewünschte SollTemperatur zu erreichen. Die Messung der Ist-Temperatur kann auch nur zur Kontrolle bzw. Nachregelung der Heißwassertemperatur herangezogen werden.

Außerdem kann im Rahmen der vorliegenden Erfindung vorgesehen sein, dass in Strömungsrichtung vor dem Durchlauferhitzer ein zweiter Temperatursensor angeordnet ist, der zur Bestimmung einer Zulauftemperatur dient. Die Zulauftemperatur kann, besonders wenn diese zeitlichen Schwankungen unterworfen ist, als weiterer Parameter in die Regelung der Heißwassertemperatur einfließen.

Bei einer bevorzugten Ausführungsform ist außerdem vorgesehen, dass zwischen Durchlauferhitzer und Wasserauslauf ein Bypassventil angeordnet ist, über welches ein vom Durchlauferhitzer kommender Wasserfluss direkt in einen Ablauf abgeleitet werden kann. Über ein solches Bypassventil kann der Vorlauf an Wasser, welches beim Aufwärmen des Durchlauferhitzers noch nicht die gewünschte Endtemperatur erreicht hat, in den Ablauf abgeleitet werden, sodass sichergestellt wird, dass aus der Wasserauslaufarmatur nur Wasser der gewählten bzw. gewünschten Heißwassertemperatur ausgegeben wird. Außerdem kann über ein solches Bypassventil nach Beendigung einer Heißwasserentnahme eventuell in der Wasserauslaufarmatur verbliebenes Heißwasser entleert werden, sodass kein Heißwasser nachtropft oder bei anschließender Entnahme von Warm- oder Kaltwasser versehentlich aus der Wasserauslaufarmatur austreten kann.

Bei einer bevorzugten Weiterbildung der vorliegenden Erfindung ist die Vorrichtung mit einem Entkalkungssystem zum automatischen Entkalken des Durchlauferhitzers ausgerüstet. Diese Maßnahme trägt der Erkenntnis Rechnung, dass bei einem im Rahmen der vorliegenden Erfindung geeigneten Durchlauferhitzer aufgrund der zu schnellen Erwärmung des Wassers erforderlich hohen Temperaturen und der engen, aber langen Strömungswege im Durchlauferhitzer, dieser anfällig für Verkalkung ist. Mithilfe des integrierten Entkalkungssystems kann, sobald dies erforderlich ist, zu beliebiger Zeit und ohne größeren Aufwand eine Entkalkung des Durchlauferhitzers durchgeführt werden.

Bei einer bevorzugten Ausführungsform umfasst das Entkalkungssystem einen Mischbehälter zum Anmischen einer Entkalkungsmittellösung, einen Aufnahmeraum für einen Vorratsbehälter für flüssiges Entkalkerkonzentrat, sowie eine Dosierpumpe zum Dosieren und Fördern von Entkalkerkonzentrat aus dem Vorratsbehälter in den Mischbehälter. In dem Mischbehälter wird somit bei Bedarf, also wenn ein Entkalkungsvorgang durchgeführt werden soll, aus dem flüssigen Entkalkerkonzentrat, welches selbsttätig über die Dosierpumpe aus dem Vorratsbehälter in den Mischbehälter gefördert wird, und Wasser die Entkalkungsmittellösung gemischt.

Die Verwendung eines flüssigen Entkalkerkonzentrats hat den Vorteil, dass in der Vorrichtung eine Konzentratmenge für eine Vielzahl von Entkalkungsvorgängen bevorratet werden kann, sodass ein Auswechseln oder Nachfüllen des Vorratsbehälters auch bei häufigen Entkalkungsvorgängen nur in größeren Zeitabständen erforderlich ist. Dies vermindert den notwendigen Wartungsaufwand erheblich und ermöglicht es dem Benutzer ohne technische Kenntnisse die Entkalkung regelmäßig durchzuführen. Zudem lässt sich ein flüssiges Entkalkerkonzentrat einfach und betriebssicher über eine Dosierpumpe dosieren, sodass die Entkalkungsmittellösung automatisiert und stets in der richtigen, gewünschten Dosierung gemischt werden kann.

Zweckmäßigerweise umfasst die Wasserausgabevorrichtung hierbei eine im Wasserzulauf angeordnete Wasserpumpe, welche saugseitig über ein saugseitiges Wegeventil umschaltbar mit einer Entnahmeleitung des Mischbehälters verbindbar ist, um in der umgeschalteten Ventilstellung des saugseitigen Wegeventils die Entkalkungsmittellösung aus dem Mischbehälter zu dem Heißwasserbereiter zu fördern. Außerdem kann die Wasserpumpe druckseitig über ein druckseitiges Wegeventil umschaltbar mit einer Füllleitung des Mischbehälters verbunden sein, um in der umgeschalteten Ventilstellung des druckseitigen Wegeventils Wasser zu dem Mischbehälter zu fördern. Auf diese Weise kann zur Durchführung eines Entkalkungsvorganges der Mischbehälter automatisiert mit Wasser, welches vor dem Durchlauferhitzer abgezweigt wird, befüllt und die Entkalkungsmittellösung gemischt werden. Über den im Wasserweg angeordneten Durchflussmesser kann das in den Mischbehälter geleitete Wasservolumen abgemessen werden.

Bei einer Weiterbildung der vorliegenden Erfindung kann der Durchflussmesser außerdem dazu benutzt werden, einen Verkalkungszustand des Durchlauferhitzers zu beurteilen. Die Steuerungsvorrichtung ist hierbei ausgebildet, aus Messwerten des Durchflussmessers auf einen Verkalkungszustand des Durchlauferhitzers zu schließen und bei Erreichen eines vorgegebenen Wertes, insbesondere für eine maximale Durchlaufzeit oder eine Mindestdurchflussrate, eine Meldung zu generieren, dass ein automatischer Entkalkungsvorgang erforderlich ist.

Die Steuerung automatisierter Entkalkungsvorgänge erfolgt hierbei vorzugsweise durch die Steuerungsvorrichtung. Diese ist programmiert, zur Durchführung eines automatischen Entkalkungsvorganges, die Dosierpumpe anzusteuern, um eine vorbestimmte Menge an Entkalkerkonzentrat aus dem Vorratsbehälter in den Mischbehälter zu fördern. Dann schaltet die Steuerungsvorrichtung das saugseitige Wegeventil um, um die Wasserpumpe mit der Füllleitung des Mischbehälters zu verbinden und steuert die Wasserpumpe an, um eine vorgebbare Menge an Wasser in den Mischbehälter zu fördern. Schließlich schaltet die Steuerungsvorrichtung das saugseitige Wegeventil um, um die Wasserpumpe saugseitig mit dem Mischbehälter zu verbinden und die Entkalkungsmittellösung aus dem Mischbehälter zu dem Durchlauferhitzer zu fördern. Hierbei wird vorzugsweise ein hinter dem Durchlauferhitzer befindliches erstes Ventil ebenfalls umgeschaltet, über das die Entkalkungsmittellösung von dem Durchlauferhitzer direkt in den Ablauf geleitet, also nicht über die Wasserauslaufarmatur ausgegeben wird.

Weitere Vorteile und Eigenschaften der vorliegenden Erfindung ergeben sich aus der nachfolgenden Beschreibung eines Ausführungsbeispiels anhand der Figuren.
- Figur 1: zeigt ein Wasserflussschema einer Vorrichtung zur Ausgabe von Heißwasser mit einem Durchlauferhitzer als Heißwasserbereiter und
- Figur 2: zeigt ein zweites Ausführungsbeispiel mit einem dem Durchlauferhitzer vorgeschalteten Boiler

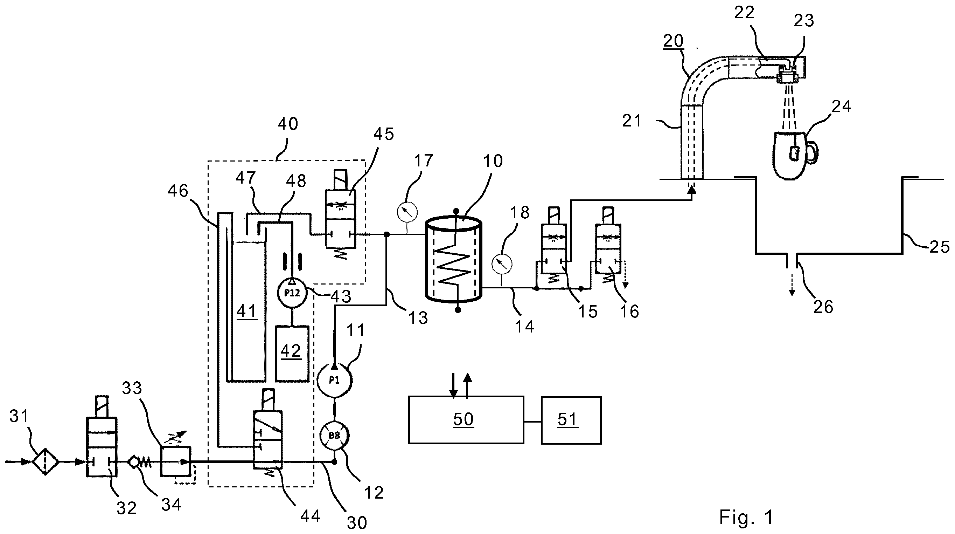

Figur 1 zeigt eine Vorrichtung zur Ausgabe von Heißwasser einstellbarer Temperatur. Als Heißwasserbereiter dient ein Durchlauferhitzer 10, der sich im Wasserzulauf einer Heißwasserarmatur 20 befindet. Über die Heißwasserarmatur 20 kann heißes bzw. kochendes Wasser ausgegeben, beispielsweise zur Zubereitung von Tee oder anderer Heißgetränke in ein unter der Armatur 20 platziertes Trinkgefäß 24. Die Heißwasserarmatur 20 ist an einer Küchenspüle 25 installiert, über die das von der Heißwasserarmatur 20 abgegebene Wasser (ohne Trinkgefäß 24) über einen Ablauf 26 abfließen kann.

In Wasserflussrichtung stromaufwärts des Durchlauferhitzers 10 befinden sich eine Wasserpumpe 11 und ein Durchflussmesser 12, die über eine Leitung 13 mit dem Durchlauferhitzer 10 verbunden sind. Am Heißwasserausgang des Durchlauferhitzers 10 sind über eine Leitung 14 zwei Wegeventile 15, 16 angeschlossen. Über das Wegeventil 15 ist die ausgangsseitige Leitung 14 des Durchlauferhitzers 10 mit dem zulaufseitigen Anschluss der Heißwasserarmatur 20 verbunden. Über das Wegeventil 16 kann die Leitung 14 direkt mit einem Ablauf verbunden werden. Die Funktion der Wegeventile 15, 16 kann in gleicher Weise auch durch ein gemeinsames 3/2-Wegeventil realisiert werden.

Vor und hinter dem Durchlauferhitzer 10 sind an die Leitungen 13 und 14 jeweils Temperatursensoren 17, 18 angeschlossen, über die Zulauftemperatur bzw. die Ist-Temperatur des erhitzten Heißwassers bestimmt werden können.

Der Durchflussmesser 12 ist im Ausführungsbeispiel vor der Wasserpumpe 11 angeordnet. Es wäre jedoch in gleicher Weise möglich, den Durchflussmesser 12 in Flussrichtung hinter der Wasserpumpe 11 anzuordnen. Saugseitig ist die Wasserpumpe 11 über eine Trinkwasserzuleitung 30 mit einem Trinkwasseranschluss 31 des öffentlichen Leitungsnetzes verbunden. In der Zuleitung 30 sind außerdem ein Absperrventil 32, ein Rückschlagventil 34 und ein Druckminderer 33 vorgesehen.

Die Wasserpumpe 11 fördert Trinkwasser aus der angeschlossenen Trinkwasserzuleitung 30 über die Leitung 13 zu dem Durchlauferhitzer 10. Das erhitzte Trinkwasser kann über die Leitung 14 bei geöffnetem Wegeventil 15 über die Heißwasserarmatur 20 ausgegeben werden.

Über eine programmierbare Steuerung 50 werden die Wegeventile 15, 16, 32 sowie die Wasserpumpe 11 und der Durchlauferhitzer 10 angesteuert. Die Steuerung 50 liest auch die Temperatursensoren 17, 18 sowie den Durchflussmesser 12 aus und steuert die Pumpe 11 und den Durchlauferhitzer 10 entsprechend an. Über eine Benutzerschnittstelle 51 kann die Ausgabe von Heißwasser aktiviert und die Heißwassertemperatur vorgewählt werden. Als Benutzerschnittstelle können verschiedene Bedienelemente wie Schalter, Taster, Drehregler oder dergleichen aber auch ein Berührungs-Display dienen. Ebenso ist es möglich, die Benutzerschnittstelle über eine WLAN- oder BT-Verbindung mit einem prozessorgesteuerten Endgerät, beispielsweise einem Smart-Phone zu verbinden, um die Wasserausgabe mit einer entsprechenden Smartphone-App zu steuern.

Zur Ausgabe von Heißwasser wird von der programmierbaren Steuerung 50 das Absperrventil 32 geöffnet, die Wasserpumpe 11 und der Durchlauferhitzer 10 aktiviert und zunächst das Bypassventil 16 geöffnet, welches den Wasservorlauf in den Ablauf ableitet. In Abhängigkeit der von dem Durchflussmesser 12 gemessenen Durchflussrate und der über den Temperatursensor 17 bestimmten Vorlauftemperatur des Wassers wird die Pumpleistung der Pumpe 11 eingestellt, sodass die durch den Temperatursensor 18 gemessene Ist-Temperatur des erhitzten Wassers der vorgewählten Solltemperatur entspricht. Sobald diese erreicht ist wird das Ventil 15 geöffnet und das Ventil 16 geschlossen. Das Heißwasser strömt nun durch die Heißwasserarmatur 20 und wird in ein darunter platziertes Trinkgefäß 24 oder die Spüle 25 ausgegeben.

Nach Beendigung der Heißwasserabgabe wird die Pumpe 11 abgestellt und das Zulaufventils 32 geschlossen. Außerdem kann das Ventil 15 geöffnet werden, um in der Wasserauslaufarmatur 20 und der Leitung 14 noch verbliebenes Heißwasser in den Ablauf zu entleeren. Anschließend wird das Ventil 15 geschlossen, sodass kein Heißwasser mehr durch die Armatur 20 nachtropfen kann

Die Leistungsregelung der Pumpe erfolgt über Phasenanschnittssteuerung. Hierbei wird beispielsweise durch einen Triac der Strom nach dem Nulldurchgang der Versorgungs(wechsel)spannung verzögert eingeschaltet, sodass nur über einen Teil jeder Wechselspannungsperiode Strom fließt. Die Verzögerungszeit zwischen Nulldurchgang und Einschalten des Stromflusses ist hierbei einstellbar. In gleicher Weise ist jedoch auch eine Leistungsregelung über Pulsweitenmodulation, z.B. im Falle einer Zahnradpumpe, oder eine Drehzahlregelung der Pumpe möglich und im Rahmen der vorliegenden Erfindung mit umfasst.

Alternativ zur Leistungsregelung der Wasserpumpe 11 ist es auch möglich, im Wasserweg ein einstellbares Stetigventil vorzusehen, dessen Ventilöffnung kontinuierlich oder schrittweise veränderbar ist. Beispielsweise kann als Ventil ein Schrittmotor getriebenes Nadel- oder Tellerventil eingesetzt werden.

Die Heißwasserarmatur ist im vorliegenden Ausführungsbeispiel zur Ausgabe sowohl von Heißwasser als auch von Warm- und Kaltwasser ausgebildet. Sie besitzt ein äußeres Auslaufrohr 21 mit einer integrierten inneren Wasserleitung 22 für das Heißwasser. Die Heißwasserleitung 22 mündet in einen oberen Bereich eines Mündungsstücks 23, an welchem das Heißwasser aus der Armatur 20 ausfließt.

Warm- und Kaltwasser können über den ringförmigen Außenraum des Auslaufrohrs 21 um die Heißwasserleitung 22 herum geleitet werden und durch seitliche Kanäle des Mündungsstücks 23 zu dessen Mündungsöffnung ausfließen. Um ein Zurückfließen von Heißwasser aus der Heißwasserleitung 22 über das Mündungsstück 23 in das äußere Auslaufrohr 21 zu verhindern, kann das Mündungsstück an seinen seitlichen Zulaufkanälen mit einem Rückschlagventil, beispielsweise in Form elastischer Klappen, versehen sein. Für Warm- und Kaltwasser ist ein separates Mischventil, beispielsweise ein Einhebelmischer, vorgesehen, der in der Figur jedoch nicht dargestellt ist. Eine Heißwasserarmatur, die im Rahmen der vorliegenden Erfindung zum Einsatz kommen kann, ist beispielsweise in der EP 29 37 477 A1 beschrieben, auf die zur Vermeidung unnötiger Wiederholungen hiermit vollinhaltlich Bezug genommen wird.

Die in die Heißwasserarmatur 20 integrierte Heißwasserleitung 22 besteht vorzugsweise aus einem Material mit geringer Wärmekapazität und niedriger Wärmeleitfähigkeit, beispielsweise aus PTFE oder einem anderen trinkwassergeeigneten und (siede-)temperaturbeständigen Kunststoff. Auf diese Weise wird sichergestellt, dass das von dem Durchlauferhitzer 10 erhitzte Heißwasser auf dem Weg durch die Zuleitung und die Heißwasserarmatur 20 sich allenfalls in unerheblichem Maße abkühlt.

Das Auslaufrohr 21 ist in der Figur zur besseren Verdeutlichung im vorderen Bereich aufgeschnitten gezeichnet, so dass die Heißwasserleitung 22 und das Mündungsstück 23 zu erkennen sind, die sich im Inneren des Auslaufrohres 21 befinden. Tatsächlich jedoch reicht das Auslaufrohr natürlich bis über das nach unten offene Mündungsstücks 23 und ist frontseitig verschlossen. Außerdem sei darauf hingewiesen, dass die gewählte Form des Auslaufrohrs rein schematisch und beispielhaft ist, und dass beliebige andere Ausläufe bzw. Heißwasserarmaturen mit oder ohne integrierte Heißwasserleitung im Rahmen der vorliegenden Erfindung zum Einsatz kommen können. Alternativ zu der beschriebenen Heißwasserarmatur mit im Auslauf integrierter Heißwasserleitung können zur Ausgabe von Heißwasser einerseits und Warm- und Kaltwasser mit einstellbarem Mischverhältnis anderseits nämlich auch getrennte Armaturen oder eine kombinierte Armatur mit getrennten Ausläufen verwendet werden. Auch diese sind daher im Rahmen der vorliegenden Erfindung mit umfasst.

Um eine schnelle Aufwärmung des Durchlauferhitzers 10 nach dem Einschalten zu ermöglichen besitzt dieser vorzugsweise eine niedrige thermische Masse. Beispielsweise kann der Durchlauferhitzer in Form einer kompakten Heizpatrone aufgebaut sein, die aus einem dünnwandigen, mit elektrischen Heizdrähten versehenen zylindrischen Innenkörper und einem äußeren zylindrischen Mantel gebildet wird. Die Mantelfläche des zylindrischen Innenkörpers ist hierbei außenseitig mit einer wendelförmig verlaufenden Nut versehen, die nach außen hin von dem äußeren Mantel begrenzt wird und so einen Strömungsweg für das zu erhitzende Trinkwasser bildet.

Da der Durchlauferhitzer 10 aufgrund der für eine schnelle Erwärmung des Wassers erforderlichen hohen Temperaturen und der engen, aber langen Strömungswege anfällig für Verkalkung ist, ist im Ausführungsbeispiel außerdem ein optionales Entkalkungssystem 40 vorgesehen. Das Entkalkungssystem 40 umfasst einen Mischbehälter 41, einen Vorratsbehälter 42 für flüssiges Entkalkerkonzentrat und eine Dosierpumpe 43. Die saugseitig der Wasserpumpe 11 befindliche Trinkwasserzuleitung 30 kann über ein Umschaltventil 44 mit einer bis zum Boden des Mischbehälters 41 reichenden Ansaugleitung 46 verbunden werden, um zum Zwecke einer Entkalkung eine Entkalkungsmittellösung aus dem Mischbehälter 41 anzusaugen und zu dem Durchlauferhitzer 10 zu fördern. Die Entkalkungsmittellösung wird im Mischbehälter 41 angemischt, indem über die Dosierpumpe 43 eine dosierbare Menge des Entkalkerkonzentrats über die Zuleitung 48 in den Mischbehälter gefördert wird. Über ein Wegeventil 45, welches mit der druckseitig an die Pumpe 11 angeschlossenen Zuleitung 13 verbunden ist, kann mittels der Wasserpumpe 11 Frischwasser über die Zuleitung 47 in den Mischbehälter 41 eingefüllt werden. Die Menge des eingefüllten Frischwassers lässt sich hierbei mithilfe des Durchflussmessers 12 abmessen. Das Ventil 45 wird geschlossen, nachdem eine vorbestimmte Wassermenge in den Mischbehälter 41 eingefüllt wurde.

Nachdem die Entkalkungsmittellösung im Mischbehälter 41 angemischt wurde, kann über das Ventil 44 die Zuleitung 30 mit der Ansaugleitung 46 verbunden werden. Anschließend wird das Drainageventil 16 geöffnet und über die Wasserpumpe 11 die Entkalkungsmittellösung aus dem Mischbehälter 41 durch den Durchlauferhitzer 10 gefördert. Während des Entkalkungsvorgangs kann der Durchlauferhitzer 10 angeschaltet sein, da durch bei höheren Temperaturen der Entkalkungsmittellösung eine raschere Lösung von Kalkrückständen erzielt wird.

Nach Beendigung des Entkalkungsvorgangs wird das Umschaltventil 44 wieder in die Betriebsstellung zurückgeschaltet, in der die Zuleitung 30 mit dem Wasseranschluss 31 verbunden ist, und mittels der Wasserpumpe 11 der Durchlauferhitzer 10 nochmals mit Frischwasser durchgespült. Das optionale Rückschlagventil 34 verhindert, dass gegebenenfalls noch in der Zuleitung 30 befindliche Entkalkungsmittellösung in Richtung des Wasserzulaufs 31 strömen kann. Die Ansteuerung der Ventile 44, 45 sowie der Dosierpumpe 43 kann in gleicher Weise wie die Ansteuerung der übrigen Wegeventile über die Steuerung 50 erfolgen, die somit auch den Entkalkungsvorgang ausführt.

Als Entkalkerkonzentrat können zum Beispiel Zitronensäure, Apfelsäure oder Weinsäure in Form einer konzentrierten Lösung eingesetzt werden. Das Entkalkerkonzentrat kann entweder in Einwegverpackungen abgefüllt oder in einen befüllbaren Vorratsbehälter bei Bedarf nachgefüllt werden. Hierbei kann der Vorratsbehälter fest in die Wasserausgabevorrichtung verbaut sein, vorzugsweise jedoch zum Befüllen oder Austausch entnehmbar sein. Im Falle eines Einwegbehälters kann dieser beispielsweise geöffnet und mit der Dosierpumpe 43 verbunden werden, indem in ihn mit einer Entnahmelanze oder einem Dorn eingestochen wird.

Mithilfe des Durchflussmessers 12 lässt sich eine Durchflussrate, also die Volumenmenge pro Zeiteinheit bestimmen, die bei einem Heißwasserbezug durch den Durchlauferhitzer fließt. Bei bekannter Pumpleistung der Wasserpumpe 11 lässt sich hieraus ein Verkalkungszustand des Durchlauferhitzers schlussfolgern, sodass die Steuerung 50 bei Erreichen eines vorgegebenen Wertes, beispielsweise für eine maximale Durchlaufzeit oder eine Mindestdurchflussrate eine Meldung erzeugt, dass ein automatischer Entkalkungsvorgang durchgeführt werden sollte. Ein Bediener kann dann bei nächster Gelegenheit einen Entkalkungsvorgang starten.

Im Rahmen des vorliegenden Ausführungsbeispiels ist der Durchlauferhitzer 10 mit einem Trinkwasseranschluss 31 des öffentlichen Leitungsnetzes verbunden. Die Zulauftemperatur des Leitungswassers beträgt somit jahreszeitabhängig ca. 10 - 20°C. Es ist jedoch ebenso möglich und im Rahmen der vorliegenden Erfindung mit umfasst, dass der Wasserzulauf des Durchlauferhitzers 10 an eine Warmwasserquelle, beispielsweise eine zentrale Warmwasserversorgung oder einem vorgeschalteten Boiler angeschlossen ist. Beispielsweise kann in einem solchen vorgeschalteten Boiler Wasser bereits mit einer höheren Temperatur, zum Beispiel 65°C vorgehalten werden, sodass der Durchlauferhitzer 10 das Trinkwasser lediglich um die Temperaturdifferenz zu einer einstellbaren Ausgabetemperatur von beispielsweise 70° bis 98°C aufheizen muss. Auf diese Weise können höhere Durchlaufraten von beispielsweise 1 bis 2 l/min realisiert werden.

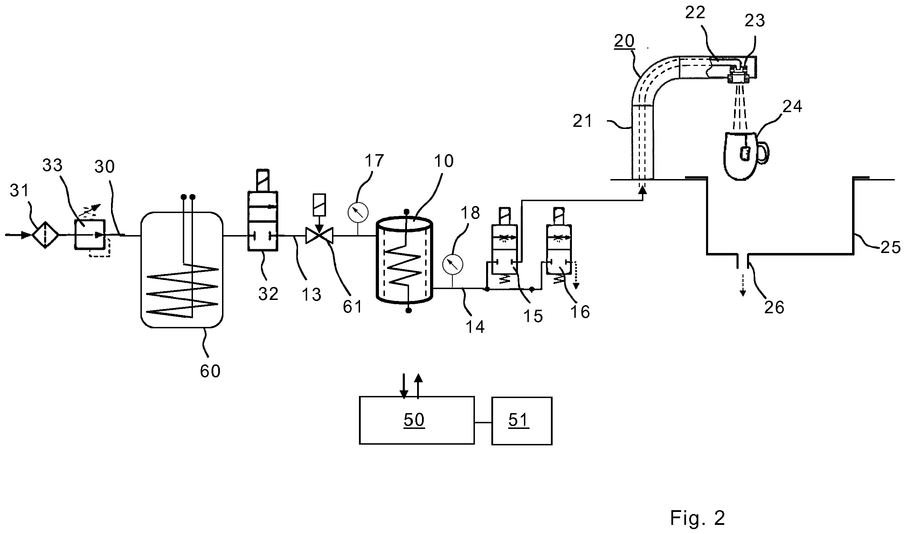

In Figur 2 ist ein alternatives zweites Ausführungsbeispiel gezeigt, bei dem statt einer Wasserpumpe 11 ein Stetigventil 61 in der Wasserzuleitung 30 vorgesehen ist, um die Durchflussrate durch den Durchlauferhitzer 10 einzustellen. Die Wasserausgabe erfolgt somit durch den normalen Leitungsdruck im Leitungsnetz, der über einen Druckminderer 33 auf einen konstanten Wert eingestellt wird. Zwischen dem Druckminderer 33 und dem zulaufseitigen Absperrventil 32 befindet sich ein Boiler 60, in dem, wie vorstehend erläutert, vorerwärmtes Wasser vorgehalten wird. Auf ein integriertes Entkalkungssystem wurde in diesem Ausführungsbeispiel verzichtet.

## Patentansprüche

1. Wasserausgabevorrichtung zur Ausgabe von Heißwasser, mit einer an einer Spüle (25) installierbaren Wasserauslaufarmatur (20) und mit einem in einem Wasserzulauf (30) der Wasserauslaufarmatur (20) angeordneten Heißwasserbereiter, wobei der Heißwasserbereiter als Durchlauferhitzer (10) ausgebildet ist, wobei in dem Wasserzulauf (30) der Wasserauslaufarmatur (20) außerdem mindestens ein Messwertgeber angeordnet ist, der eine Messgröße in Bezug auf durch den Durchlauferhitzer (10) strömendes Wasser ermittelt und wobei die Wasserausgabevorrichtung eine Steuerungsvorrichtung (50) aufweist, welche ausgebildet ist, in Abhängigkeit von Messwerten des Messwertgebers (12) eine Durchflussrate durch den Durchlauferhitzer (10) zu regeln,
**dadurch gekennzeichnet, dass**
die Steuerungsvorrichtung (50) ausgebildet ist, durch Regelung der Durchflussrate die Temperatur des Heißwassers in einem Temperaturbereich zwischen 70° und 98°C einzustellen.

2. Wasserausgabevorrichtung nach Anspruch 1, bei der in dem Wasserzulauf (30) der Wasserauslaufarmatur (20) zulaufseitig des Durchlauferhitzers (10) eine Wasserpumpe (11) angeordnet ist und die Steuerungsvorrichtung (50) ausgebildet ist die Pumpleistung der Wasserpumpe (11) zu regeln, um die Durchflussrate zu verändern.

3. Wasserausgabevorrichtung nach Anspruch 1, bei der in dem Wasserzulauf (30) der Wasserauslaufarmatur (20) ein elektrisch ansteuerbares Stetigventil (61) angeordnet ist und die Steuerungsvorrichtung (50) ausgebildet ist, die Durchflussrate durch Öffnen oder Schließen des Stetigventils (61) zu verändern.

4. Wasserausgabevorrichtung nach einem der vorangehenden Ansprüche, bei der die Steuerungsvorrichtung (50) ausgebildet ist, zusätzlich eine elektrische Heizleistung des Durchlauferhitzers (10) einzustellen.

5. Wasserausgabevorrichtung nach einem der vorangehenden Ansprüche, bei der der mindestens eine Messwertgeber einen Durchflussmesser (12) umfasst, der eine Ist-Durchflussrate bestimmt, in deren Abhängigkeit eine Soll-Durchflussrate durch den Durchlauferhitzer (10) geregelt wird.

6. Wasserausgabevorrichtung nach einem der vorangehenden Ansprüche, bei der der mindestens eine Messwertgeber einen in Strömungsrichtung hinter dem Durchlauferhitzer (10) angeordneten Temperatursensor (18) umfasst, der zur Bestimmung einer Ist-Temperatur des Heißwassers dient.

7. Wasserausgabevorrichtung nach einem der vorangehenden Ansprüche, bei der der mindestens eine Messwertgeber einen in Strömungsrichtung vor dem Durchlauferhitzer angeordneten Temperatursensor (17) umfasst, der zur Bestimmung einer Zulauftemperatur dient.

8. Wasserausgabevorrichtung nach einem der vorangehenden Ansprüche, bei der zwischen Durchlauferhitzer (10) und Wasserauslaufarmatur (20) ein Bypassventil (16) angeordnet ist, über welches ein vom Durchlauferhitzer kommender Wasserfluss direkt in einen Ablauf abgeleitet werden kann.

9. Wasserausgabevorrichtung nach einem der Ansprüche 1 oder 3 bis 8, mit einem Entkalkungssystem (40) zum automatischen Entkalken des Durchlauferhitzers (10), wobei das Entkalkungssystem (40) vorzugsweise einen Mischbehälter (41) zum Anmischen einer Entkalkungsmittellösung, einen Aufnahmeraum für einen Vorratsbehälter (42) für flüssiges Entkalkerkonzentrat sowie eine Dosierpumpe (43) zur dosierten Förderung von Entkalkerkonzentrat aus dem Vorratsbehälter (42) in den Mischbehälter (41) umfasst, in welchem aus Entkalkerkonzentrat und Wasser die Entkalkungsmittellösung gemischt wird.

10. Wasserausgabevorrichtung nach Anspruch 9, mit einer im Wasserzulauf (30) der Wasserauslaufarmatur (20) angeordneten Wasserpumpe (11), welche saugseitig über ein saugseitiges Wegeventil (44) umschaltbar mit einer Entnahmeleitung (46) des Mischbehälter (41) verbindbar ist, um in der umgeschalteten Ventilstellung des saugseitigen Wegeventils (44) die Entkalkungsmittellösung aus dem Mischbehälter (41) zu dem Durchlauferhitzer (10) zu fördern.

11. Wasserausgabevorrichtung nach Anspruch 9, mit einer im Wasserzulauf (30) der Wasserauslaufarmatur (20) angeordneten Wasserpumpe (11), welche druckseitig über ein druckseitiges Wegeventil (45) umschaltbar mit einer Füllleitung (47) des Mischbehälters (41) verbindbar ist, um in der umgeschalteten Ventilstellung des druckseitigen Wegeventils (45) Wasser zu dem Mischbehälter (41) zu fördern, wobei insbesondere die Wasserpumpe (11) zusätzlich saugseitig über ein saugseitiges Wegeventil (44) umschaltbar mit einer Entnahmeleitung (46) des Mischbehälter (41) verbindbar ist, um in der umgeschalteten Ventilstellung des saugseitigen Wegeventils (44) die Entkalkungsmittellösung aus dem Mischbehälter (41) zu dem Durchlauferhitzer (10) zu fördern.

12. Wasserausgabevorrichtung nach einem der Ansprüche 9 bis 11, bei der die Steuervorrichtung (50) aus Messerwerten des Durchflussmessers (12) auf einen Verkalkungszustand des Durchlauferhitzer (10) schließt und bei Erreichen eines vorgegebenen Wertes, insbesondere für eine maximale Durchlaufzeit oder eine Mindestdurchflussrate, eine Meldung generiert, dass ein automatischer Entkalkungsvorgang erforderlich ist.

13. Wasserausgabevorrichtung nach den Ansprüchen 10 und 11, bei der die Steuerungsvorrichtung (50) programmiert ist, zur Durchführung eines automatischen Entkalkungsvorgangs die Dosierpumpe (43) anzusteuern, um eine vorbestimmte Menge an Entkalkerkonzentrat aus dem Vorratsbehälter (42) in den Mischbehälter (41) zu fördern, die weiter programmiert ist, das druckseitige Wegeventil (45) umzuschalten, um die Wasserpumpe (11) mit der Füllleitung (47) des Mischbehälters (41) zu verbinden, und die Wasserpumpe (11) anzusteuern, eine vorgebbare Menge an Wasser in den Mischbehälter (41) zu fördern, und die weiter programmiert ist, das saugseitige Wegeventil (44) umzuschalten, um die Wasserpumpe (11) saugseitig mit dem Mischbehälter (41) zu verbinden und die Entkalkungsmittellösung aus dem Mischbehälter (41) zu dem Durchlauferhitzer (10) zu fördern.

14. Wasserausgabevorrichtung nach einem der vorangehenden Ansprüche, bei der dem Durchlauferhitzer (10) ein Heißwasserboiler (60) vorgeschaltet ist.

15. Wasserausgabevorrichtung nach einem der vorangehenden Ansprüche, bei dem die Wasserauslaufarmatur (20) eine in ein Wasserauslaufrohr (21) integrierte Heißwasserleitung (22) aufweist, welche vorzugsweise aus einem trinkwassergeeigneten und temperaturbeständigen Kunststoff besteht.

## Claims

1. Water-dispensing device for dispensing hot water, having a water outlet fitting (20) installable on a sink (25) and having a water heater arranged in a water inlet (30) of the water outlet fitting (20),
wherein the water heater is in the form of a continuous flow heater (10), wherein there is also arranged in the water inlet (30) of the water outlet fitting (20) at least one measuring transducer which determines a measured variable in respect of water flowing through the continuous flow heater (10) and wherein the water-dispensing device has a control device (50) which is configured to regulate a flow rate through the continuous flow heater (10) in dependence upon measured values of the measuring transducer (12),
**characterised in that**
the control device (50) is configured to set the temperature of the hot water in a temperature range between 70° and 98°C by regulating the flow rate.

2. Water-dispensing device according to claim 1, wherein a water pump (11) is arranged in the water inlet (30) of the water outlet fitting (20) on the inlet side of the continuous flow heater (10), and the control device (50) is configured to regulate the pump output of the water pump (11) in order to alter the flow rate.

3. Water-dispensing device according to claim 1, wherein an electrically actuatable proportional valve (61) is arranged in the water inlet (30) of the water outlet fitting (20), and the control device (50) is configured to alter the flow rate by opening or closing the proportional valve (61).

4. Water-dispensing device according to any one of the preceding claims, wherein the control device (50) is configured additionally to set an electrical heat output of the continuous flow heater (10).

5. Water-dispensing device according to any one of the preceding claims, wherein the at least one measuring transducer comprises a flow meter (12) which determines an actual flow rate in dependence upon which a desired flow rate through the continuous flow heater (10) is regulated.

6. Water-dispensing device according to any one of the preceding claims, wherein the at least one measuring transducer comprises a temperature sensor (18) arranged downstream of the continuous flow heater (10) in the direction of flow, which temperature sensor serves to determine an actual temperature of the hot water.

7. Water-dispensing device according to any one of the preceding claims, wherein the at least one measuring transducer comprises a temperature sensor (17) arranged upstream of the continuous flow heater in the direction of flow, which temperature sensor serves to determine an inlet temperature.

8. Water-dispensing device according to any one of the preceding claims, wherein between the continuous flow heater (10) and the water outlet fitting (20) there is arranged a bypass valve (16) by means of which a flow of water coming from the continuous flow heater can be discharged directly into a drain.

9. Water-dispensing device according to any one of claims 1 or 3 to 8, having a descaling system (40) for automatic descaling of the continuous flow heater (10), wherein the descaling system (40) preferably comprises a mixing container (41) for mixing a descalant solution, a receiving space for a storage container (42) for liquid descaler concentrate, and a metering pump (43) for metered feeding of descaler concentrate from the storage container (42) to the mixing container (41) in which the descalant solution is mixed from descaler concentrate and water.

10. Water-dispensing device according to claim 9, having a water pump (11) arranged in the water inlet (30) of the water outlet fitting (20), which water pump is on the suction side switchably connectible via a suction-side directional control valve (44) to an extraction line (46) of the mixing container (41) in order, in the switched valve position of the suction-side directional control valve (44), to feed the descalant solution from the mixing container (41) to the continuous flow heater (10).

11. Water-dispensing device according to claim 9, having a water pump (11) arranged in the water inlet (30) of the water outlet fitting (20), which water pump is on the pressure side switchably connectible via a pressure-side directional control valve (45) to a filling line (47) of the mixing container (41) in order, in the switched valve position of the pressure-side directional control valve (45), to feed water to the mixing container (41), wherein especially the water pump (11) is additionally on the suction side switchably connectible via a suction-side directional control valve (44) to an extraction line (46) of the mixing container (41) in order, in the switched valve position of the suction-side directional control valve (44), to feed the descalant solution from the mixing container (41) to the continuous flow heater (10).

12. Water-dispensing device according to any one of claims 9 to 11, wherein the control device (50) derives a state of scaling of the continuous flow heater (10) from meter values of the flow meter (12) and, when a preset value is reached, especially for a maximum flow time or a minimum flow rate, generates a message that an automatic descaling operation is required.

13. Water-dispensing device according to claims 10 and 11, wherein the control device (50), for carrying out an automatic descaling operation, is programmed to actuate the metering pump (43) in order to feed a predetermined quantity of descaler concentrate from the storage container (42) to the mixing container (41); is further programmed to switch over the pressure-side directional control valve (45) in order to connect the water pump (11) to the filling line (47) of the mixing container (41), and to actuate the water pump (11) to feed a presettable quantity of water to the mixing container (41); and is further programmed to switch over the suction-side directional control valve (44) in order to connect the water pump (11) on the suction side to the mixing container (41) and to feed the descalant solution from the mixing container (41) to the continuous flow heater (10).

14. Water-dispensing device according to any one of the preceding claims, wherein a hot water boiler (60) is arranged upstream of the continuous flow heater (10).

15. Water-dispensing device according to any one of the preceding claims, wherein the water outlet fitting (20) has a hot water line (22) integrated into a water outlet pipe (21), which hot water line preferably consists of a temperature-resistant plastics that is suitable for drinking water.

## Revendications

1. Dispositif de distribution d'eau affecté à la délivrance d'eau chaude, comprenant une robinetterie (20) de sortie d'eau, pouvant être installée sur un évier (25), et un chauffe-eau disposé dans une arrivée d'eau (30) de ladite robinetterie (20) de sortie d'eau, lequel chauffe-eau est réalisé sous la forme d'un chauffe-eau instantané (10), sachant, par ailleurs, que l'arrivée d'eau (30) de la robinetterie (20) de sortie d'eau renferme au moins un transducteur qui spécifie une grandeur de mesure se rapportant à de l'eau circulant par ledit chauffe-eau instantané (10), et sachant que ledit dispositif de distribution d'eau est muni d'un dispositif de commande (50) conçu pour réguler, en fonction de valeurs de mesure du transducteur (12), un débit parcourant ledit chauffe-eau instantané (10),
**caractérisé par le fait que**
le dispositif de commande (50) est conçu pour régler, par régulation du débit, la température de l'eau chaude dans une plage de températures entre 70° et 98 °C.

2. Dispositif de distribution d'eau selon la revendication 1, dans lequel une pompe à eau (11) est implantée dans l'arrivée d'eau (30) de la robinetterie (20) de sortie d'eau, côté afflux du chauffe-eau instantané (10), et le dispositif de commande (50) est conçu pour réguler la puissance de pompage de ladite pompe à eau (11) en vue de faire varier le débit.

3. Dispositif de distribution d'eau selon la revendication 1, dans lequel l'arrivée d'eau (30) de la robinetterie (20) de sortie d'eau renferme une vanne (61) à action continue, pouvant être pilotée électriquement, et le dispositif de commande (50) est conçu pour faire varier le débit par ouverture ou fermeture de ladite vanne (61) à action continue.

4. Dispositif de distribution d'eau selon l'une des revendications précédentes, dans lequel le dispositif de commande (50) est conçu pour régler additionnellement une puissance de chauffage électrique du chauffe-eau instantané (10).

5. Dispositif de distribution d'eau selon l'une des revendications précédentes, dans lequel le transducteur, à présence minimale, inclut un débitmètre (12) qui détermine un débit effectif en fonction duquel est régulé un débit de consigne parcourant le chauffe-eau instantané (10).

6. Dispositif de distribution d'eau selon l'une des revendications précédentes, dans lequel le transducteur à présence minimale inclut un capteur de températures (18) implanté en aval du chauffe-eau instantané (10), dans la direction de l'écoulement, et servant à déterminer une température effective de l'eau chaude.

7. Dispositif de distribution d'eau selon l'une des revendications précédentes, dans lequel le transducteur à présence minimale inclut un capteur de températures (17) implanté en amont du chauffe-eau instantané, dans la direction de l'écoulement, et servant à déterminer une température d'arrivée.

8. Dispositif de distribution d'eau selon l'une des revendications précédentes, dans lequel est interposée, entre le chauffe-eau instantané (10) et la robinetterie (20) de sortie d'eau, une vanne de dérivation (16) par l'intermédiaire de laquelle un flux d'eau, émanant dudit chauffe-eau instantané, peut être dérivé directement vers une évacuation.

9. Dispositif de distribution d'eau selon l'une des revendications 1 ou 3 à 8, comportant un système de détartrage (40) dévolu au détartrage automatique du chauffe-eau instantané (10), lequel système de détartrage (40) inclut, de préférence, un récipient de mélange (41) dédié à l'adjonction d'une solution d'agent détartrant ; un espace de réception affecté à un récipient (42) de réserve en concentrât détartreur liquide ; ainsi qu'une pompe de dosage (43) destinée au refoulement dosé de concentrât détartreur, à partir dudit récipient de réserve (42), vers ledit récipient de mélange (41) dans lequel ladite solution d'agent détartrant est mélangée sur la base de concentrât détartreur et d'eau.

10. Dispositif de distribution d'eau selon la revendication 9, comportant une pompe à eau (11) implantée dans l'arrivée d'eau (30) de la robinetterie (20) de sortie d'eau et pouvant être raccordée, côté aspiration, à un conduit de soutirage (46) du récipient de mélange (41) avec faculté de commutation par l'intermédiaire d'une vanne directionnelle (44) située côté aspiration, de manière à refouler la solution d'agent détartrant vers le chauffe-eau instantané (10), à partir dudit récipient de mélange (41), dans la position commutée de ladite vanne directionnelle (44) située côté aspiration.

11. Dispositif de distribution d'eau selon la revendication 9, comportant une pompe à eau (11) implantée dans l'arrivée d'eau (30) de la robinetterie (20) de sortie d'eau et pouvant être raccordée, côté pression, à un conduit de remplissage (47) du récipient de mélange (41) avec faculté de commutation par l'intermédiaire d'une vanne directionnelle (45) située côté pression, de manière à refouler de l'eau vers le récipient de mélange (41), dans la position commutée de ladite vanne directionnelle (45) située côté pression, sachant notamment que ladite pompe à eau (11) peut être additionnellement raccordée, côté aspiration, à un conduit de soutirage (46) dudit récipient de mélange (41) avec faculté de commutation par l'intermédiaire d'une vanne directionnelle (44) située côté aspiration, de manière à refouler la solution d'agent détartrant vers le chauffe-eau instantané (10), à partir dudit récipient de mélange (41), dans la position commutée de ladite vanne directionnelle (44) située côté aspiration.

12. Dispositif de distribution d'eau selon l'une des revendications 9 à 11, dans lequel, sur la base de valeurs de mesure du débitmètre (12), le dispositif de commande (50) infère un état entartré du chauffe-eau instantané (10) et engendre, lorsqu'une valeur préétablie est atteinte concernant notamment une durée de cycle maximale ou un débit minimal, un message signalant la nécessité d'un processus de détartrage automatique.

13. Dispositif de distribution d'eau selon les revendications 10 et 11, dans lequel, en vue de l'exécution d'un processus de détartrage automatique, le dispositif de commande (50) est programmé pour piloter la pompe de dosage (43) afin de refouler une quantité prédéterminée de concentrât détartreur vers le récipient de mélange (41), à partir du récipient de réserve (42) ; est en outre programmé pour commuter la vanne directionnelle (45) située côté pression, en vue de raccorder la pompe à eau (11) au conduit de remplissage (47) dudit récipient de mélange (41) et pour piloter ladite pompe à eau (11) de manière à refouler, vers ledit récipient de mélange (41), une quantité d'eau pouvant être préétablie ; et est par ailleurs programmé pour commuter la vanne directionnelle (44) située côté aspiration, de façon à raccorder ladite pompe à eau (11) audit récipient de mélange (41), côté aspiration, et à refouler la solution d'agent détartrant vers le chauffe-eau instantané (10) à partir dudit récipient de mélange (41).

14. Dispositif de distribution d'eau selon l'une des revendications précédentes, dans lequel une chaudière (60) à eau chaude est branchée en amont du chauffe-eau instantané (10).

15. Dispositif de distribution d'eau selon l'une des revendications précédentes, dans lequel la robinetterie (20) de sortie d'eau présente un conduit (22) d'eau chaude qui est intégré dans une tubulure (21) de sortie d'eau et est constitué, de préférence, d'une matière plastique thermorésistante et compatible avec l'eau potable.
